# FASCICULE DE BREVET EUROPEEN

(11) **EP 1 720 760 B1**
(45) Date de publication et mention de la délivrance du brevet: **23.07.2008**
(21) Numéro de dépôt: 05739404.1
(22) Date de dépôt: 04.03.2005
(51) Int. Cl.: B62D 65/18

(54) **DISPOSITIF DE TRANSPORT POUR CAISSE DE VEHICULE**
FAHRZEUGCHASSISTRANSPORTVORRICHTUNG
VEHICLE CHASSIS TRANSPORT DEVICE

(30) Priorité: 05.03.2004 FR 0402318
(43) Date de publication de la demande: 15.11.2006
(73) Titulaire: Peugeot Citroën Automobiles S.A., 78140 Vélizy Villacoublay (FR)
(72) Inventeur: GUERRIER, Michel, 35131 PONT PEAN (FR); PIROT, Damien, 35000 RENNES (FR)
(74) Mandataire: Fernandez, Francis Lionel
(86) Numéro de dépôt international: PCT/FR2005/050147
(87) Numéro de publication internationale: WO 2005/085049

(56) Documents cités:
- EP-A- 0 568 399

## Description

La présente invention concerne un dispositif pour transporter une caisse de véhicule.
La production, notamment en grande série, de véhicules tels que les véhicules automobiles requért des dispositifs de transport adaptés pour déplacer les caisses de véhicules tout au long de la ligne de fabrication et permettre les différentes opérations nécessaires à l'assemblage des véhicules parmi lesquelles on peut citer les traitements d'électrophorèse ou de cataphorèse opérant la protection anti-corrosion des tôles formant les caisses.

Parmi les dispositifs de transport connus, on peut citer les plateaux supports encore appelés luges servant notamment à l'immersion des caisses dans les bains de cataphorèse. Le brevet français FR2588837 décrit ainsi un dispositif de transport dans lequel la luge sur laquelle est placée la caisse de véhicule à déplacer est reliée de façon amovible à quatre bras pendulaires entraînés par des convoyeurs horizontaux.

Classiquement la caisse est posée sur des surfaces d'appui correspondantes de la luge. Certaines de ces surfaces forment également des pions de centrage ou pilotes pour assurer le bon positionnement de la caisse sur son support. Ces pions en saillie sur la luge sont destinés à se loger dans des ouvertures appropriées pratiquées dans la structure formant le dessous de la caisse.

Une luge comporte également des systèmes d'arrimage de la caisse. En effet, lors de certaines phases de convoyage, la luge peut être amenée à être fortement inclinée ou encore la caisse peut être entraînée hors de la luge du fait des opérations subies.

Il en est ainsi lors des phases d'immersion des caisses dans les bains de cataphorèse. Aujourd'hui, notamment pour augmenter l'isolation phonique des véhicules, les caisses de véhicule ont de moins en moins d'ouvertures en partie basse. De sorte que, lorsqu'on immerge une caisse dans un bain de cataphorèse, celle-ci à tendance à flotter et à quitter la luge sur laquelle elle repose. Par ailleurs lors des phases d'entrée et de sortie du bain la luge se trouve inclinée à plus de 30° par rapport à l'horizontale.

Il est donc importent de pouvoir arrimer la caisse par rapport à la luge. Il est par ailleurs important que le dispositif de fixation employé pour cet arrimage soit simple à mettre en oeuvre et peut sensible à son immersion régulière dans un bain de traitement.

Différents systèmes d'accrochage de la caisse sur son support ont été imaginés. Ces systèmes présentent tous les inconvénients d'être rapidement endommagés par la répétition de leurs immersions dans les bains de cataphorèses et de réclamer une importante et donc coûteuse maintenance.

L'objet de la présente invention est par conséquent de proposer un dispositif de transport comportant un tel dispositif de fixation qui soit à la fois robuste et fiable et qui ne nécessite aucune maintenance.

Le document EP 568399 présente un dispositif de transport selon le préambule de la revendication 1.

L'objet de l'invention est résolu par le dispositif de transport selon la revendication 1.

Selon une autre caractéristique du dispositif de transport objet de la présente invention, ledit doigt est monté à coulissement entre une position haute où une extrémité dudit doigt fait saillie à l'extérieur dudit plot et une position basse où ladite extrémité dudit doigt est logée à l'intérieur dudit plot.

Selon une autre caractéristique du dispositif de transport objet de la présente invention, ledit doigt est monté à coulissement entre une position haute où une extrémité du doigt fait saillie à l'extérieur du plot et une position basse où l'extrémité du doigt est logée à l'intérieur du plot.

Selon une autre caractéristique du dispositif de transport objet de la présente invention, le bras comporte à son extrémité opposée au contrepoids des cames destinées à venir appuyer sur des rondelles montées coulissantes le long dudit doigt entre des surfaces de butée axiales.

Selon une autre caractéristique du dispositif de transport objet de la présente invention, l'axe présente une section sensiblement polygonale au droit de son logement correspondant dans le bras.

Selon une autre caractéristique du dispositif de transport objet de la présente invention, le logement de l'axe dans le bras coopère avec un passage favorisant l'évacuation des liquides.

Selon une autre caractéristique du dispositif de transport objet de la présente invention, le doigt est monté à coulissement dans des passages ménagés dans le corps du plot, les passages coopérant avec des ouvertures favorisant l'évacuation des liquides hors de ces passages.

Selon une autre caractéristique du dispositif de transport objet de la présente invention, le plot comprend un corps comportant une embase, une chapelle ajourée comportant une surface d'appui annulaire, un pion surmontant la chapelle et des flasques destinés à supporter l'axe de rotation du bras d'actionnement du doigt.

Selon une autre caractéristique du dispositif de transport objet de la présente invention, les passages pour le doigt formés dans le plot s'étendent à travers le pion et à travers une plaque s'étendant transversalement entre les flasques.

On décrira maintenant plus en détail une forme de réalisation particulière de l'invention qui en fera mieux comprendre les caractéristiques essentielles et les avantages, étant entendu toutefois que cette forme de réalisation est choisie à tire d'exemple et qu'elle n'est nullement limitative. Sa description est illustrée par les dessins annexés, dans lesquels :
- la figure 1 présente schématiquement un tronçon de ligne de fabrication automobile;
- La figure 2 est une vue en perspective présentant un dispositif de transport ;
- la figure 3 est une vue en perspective éclatée du dispositif de fixation équipant le dispositif de transport selon l'invention;
- la figure 4 est une vue en perspective ¾ avant du corps du dispositif représenté à la figure 3 ;
- la figure 5 est une vue en perspective ¾ arrière du corps du dispositif représenté à la figure 3 ;
- la figure 6 est une vue de gauche du corps du dispositif représenté à la figure 3 ;
- la figure 7 est une vue en coupe longitudinale selon le plan de symétrie A-A du corps du dispositif représenté à la figure 6 ;
- la figure 8 est une vue en perspective du bras mobile du dispositif représenté à la figure 3 ;
- la figure 9 est une vue de détail de l'axe servant d'articulation au bras mobile de la figure 8 ;
- la figure 10 est une vue de détail du doigt de verrouillage du dispositif représenté à la figure 3;
- les figures 11 et 12 sont des vues similaires en coupe longitudinale du dispositif représenté à la figure 3 et précisant le fonctionnement de celui-ci.

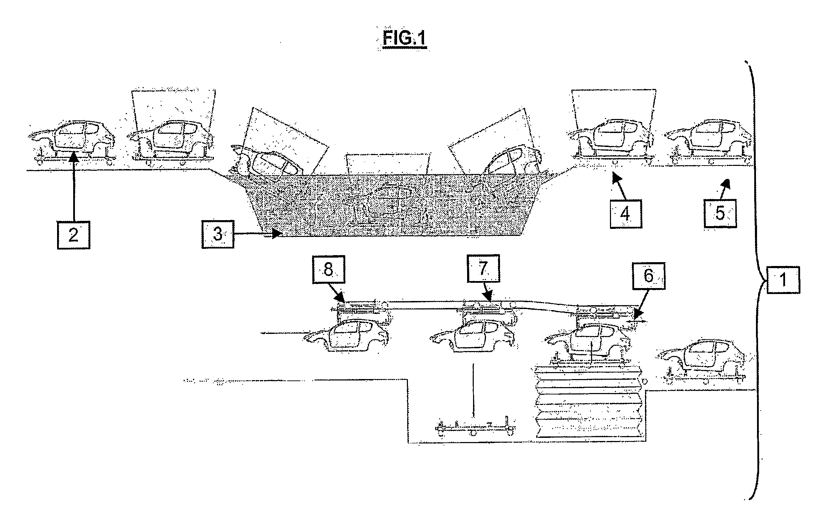

En se référant à la figure 1, on a représenté schématiquement une installation référencée 1 servant à acheminer des objets à traiter, ces objets étant représentés sous la forme de caisses de véhicules automobiles 2. Cette installation 1 concerne une chaîne de fabrication automobile et plus particulièrement, dans l'exemple illustré, un atelier de peinture.

C'est dans l'atelier de peinture que les caisses automobiles 2 qui viennent d'être assemblées sont protégées contre la corrosion et peintes. En général, les opérations s'effectuent en cinq grandes étapes, elles-mêmes subdivisées en sous-étapes appelés stades.

La première étape consiste dans le traitement des surfaces destiné à préparer les supports par un traitement de dégraissage suivi d'une phosphatation, un tel traitement comprend de l'ordre d'une douzaine de stades dont plusieurs au trempé, où les caisses sont immergées dans des bains.

La deuxième étape consiste dans la cataphorèse servant à la protection de la robe et des corps creux. La ligne de cataphorèse comprend notamment des stades de trempé et d'étuvage où le revêtement est cuit.

La troisième étape consiste dans l'application des produits d'étanchéité et de tenue au gravillonnage sur des zones précises telles que les jonctions de tôles et les surfaces exposées telles que les passages de roue.

La quatrième étape consiste dans l'application d'apprêts qui contribuent à l'aspect final et à la tenue au gravillonnage.

La dernière étape consiste dans l'application des bases hydrodiluables qui donnent la teinte définitive et les effets métalliques ou nacrés et du vernis qui procure à la peinture son esthétique finale et sa résistance.

Dans un atelier de peinture classique, une voiture met environ 8 heures pour passer toutes les étapes et parcours environ 4 km de ligne de production. Ces huit kilomètres sont constitués d'une succession d'installations de convoyage des caisses le long desquels s'opère l'accomplissement des stades de fabrication.

Le dispositif de transport illustré à la figure 1, concerne plus particulièrement les deux premières étapes comprenant des stades d'immersion dans des bains, tel que, par exemple, l'immersion dans une cuve 3 contenant un bain de cataphorèse.

L'installation 1 comprend donc des dispositifs de transport individuels tous identiques appelés luges 4 qui défilent le long de convoyeurs sous l'action de moyens d'entraînement pilotés classiques non figurés. Les convoyeurs consistent principalement dans des tables à rouleaux 5 sur lesquelles sont posées les luges 4 ou encore dans des convoyeurs aériens notamment lors des passages des caisses dans les bacs. Dans ce dernier cas, les luges se trouvent alors suspendues par des bras de sustentation pendulaires 6 connectés à des rails suspendus 7 via des galets 8.

Selon l'exemple de réalisation non limitatif illustré, l'installation 1 fonctionne en ce qui concerne les luges 4 par exemple selon un circuit en boucle fermée entre un poste d'arrivée où sont déposées les caisses automobiles 2, par exemple en sortie de l'atelier d'assemblage ou de ferrage, et un poste de sortie où les caisses automobiles 2 sont enlevés pour être mis sur d'autres types de luges pour ensuite poursuivre les étapes de fabrication, comme l'application des produits d'étanchéité.

Le changement de luges est nécessaire notamment pour ne pas souiller les bains de cataphorèse par des produits telle que de la colle servant à l'étanchéité qui pourrait être déposés sur les luges 4 au cours des opérations ultérieures.

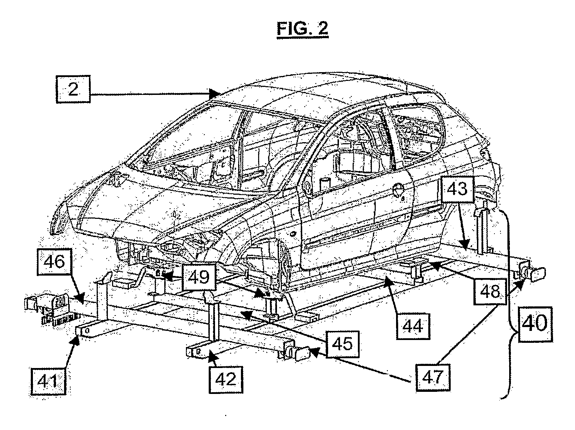

En se reportant à la figure 2, on voit qu'une luge 4 comprend une plate-forme métallique porteuse 40 sensiblement plane sur laquelle est figurée une caisse automobile 2 en traits pointillés.

Cette structure se compose principalement de deux longerons ou skis 41 et 42 disposés parallèlement l'un à l'autre et reliés entre eux par des traverses 43 44, 45 et 46. Les longerons sont constitués chacun une poutre métallique en I d'environ 5 mètres de long tandis que les traverses sont formées par des poutres métalliques parallélépipédiques disposées à plat sur la face supérieure des longerons 41 et 42. Les traverses extrêmes 43 et 46 font environ 3 mètres de long tandis que les traverses intérieures 44 et 45 sont plus courtes et ont une longueur comprise entre 1,5 et 2,5 m. Bien évidemment les longueurs des longerons et des traverses sont données à titres d'exemples non limitatifs de l'invention et peuvent être adaptées au gabarit des véhicules supportés.

Quatre axes identiques 47 s'étendent en saillie aux extrémités longitudinales des traverses extrêmes 43 et 46 pour permettre la prise de la structure 40 par les bras de suspension 6 de moyens de convoyage aérien.

La structure porteuse 40 comprend également des premières surfaces d'appui 48 disposées en saillie au-dessus des deux extrémités axiales de la traverse intérieure 44. Ces deux surfaces 48 servent à accueillir l'arrière de la caisse 2 sensiblement au droit des zones renforcées d'appui du cric.

L'avant de la caisse 2 repose lui sur des secondes surfaces d'appui formées par des plots 49 disposés en saillie au-dessus des deux extrémités axiales de l'autre traverse intérieure 45. Cette implantation des plots 49 n'est pas spécifique de l'invention ainsi on pourrait les implanter sur les longerons 41 et 42.

Ces plots 49 dont les extrémités supérieures sont destinées à pénétrer dans des trous correspondants ménagés à travers le plancher avant de la caisse 2 servent à la fois au support et au centrage de la caisse 2 sur la plate-forme 40.

Les deux plots 49 intègrent par ailleurs un mécanisme de verrouillage de la caisse 2 sur la structure porteuse 40. Il est à noter qu'un tel mécanisme de verrouillage pourrait également en variante de réalisation n'être présent que sur un des deux plots ou encore sur un troisième plot distinct des deux premiers.

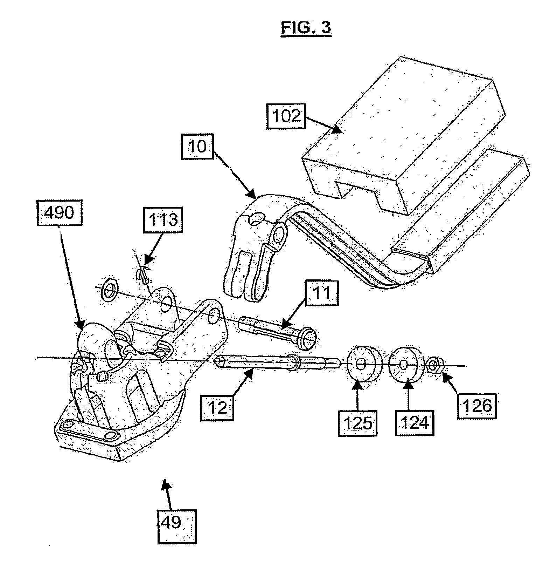

En se reportant à la figure 3 on a détaillé l'un des plots 49. Il comprend un corps 490 venant de fonderie coopérant avec un bras 10 articulé à pivotement autour d'un axe 11 porté par le corps 490 et avec un doigt 12 monté à coulissement à travers le corps 490 sous l'action du bras 10.

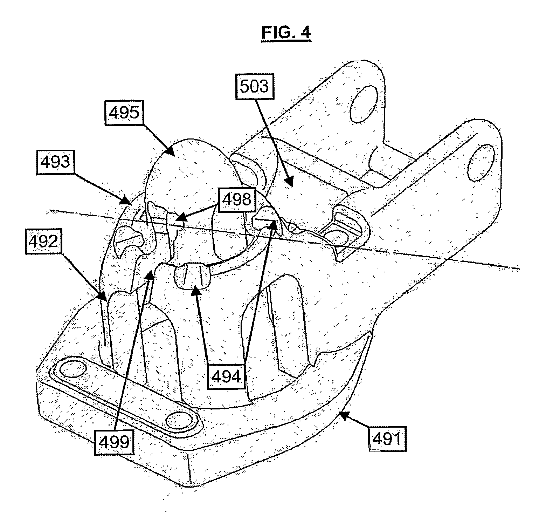

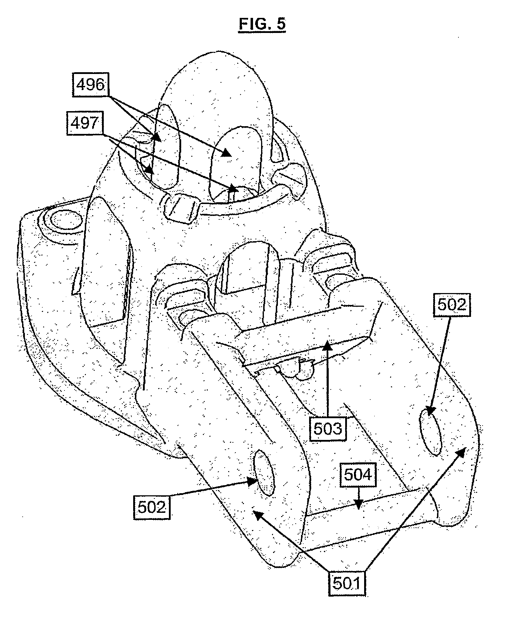

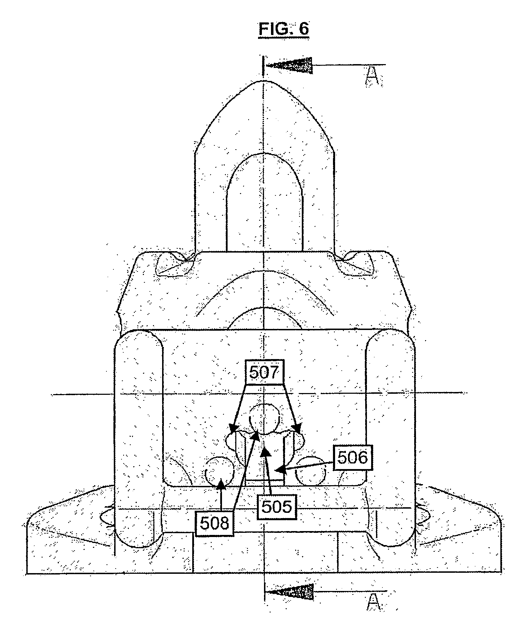

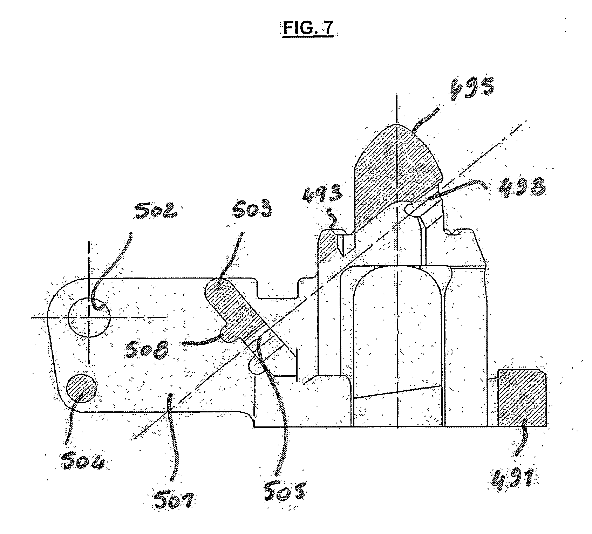

En se reportant sur les figures 4, 5, 6 et 7 on voit que ce corps 490 présente un plan de symétrie axiale A-A. Le corps 490 présente une embase 491 en forme de fer à cheval destinée à être boulonnée directement sur la traverse 45 ou sur une colonne solidaire de la traverse 45.

L'embase 491 est surmontée d'une chapelle 492 ajourée et creuse. La chapelle 492 est formée principalement par quatre arches dont deux sont traversées par le plan de symétrie A-A.

La partie supérieure de la chapelle 492 présente un rebord annulaire 493 formant une zone d'appui en saillie destinée à recevoir le plancher de la caisse 2. Ce rebord 493 est muni d'embrèvements 494 favorisant l'écoulement des liquides susceptibles de s'accumuler derrière ce rebord 493. Au sommet de la chapelle 492 et en retrait par rapport au rebord annulaire 493, s'élève un pion 495 de forme cylindrique d'axe vertical, se terminant en ogive.

Le pion 495 présente des évidements 496 s'étendant verticalement et régulièrement répartis à la périphérie du pion 495. Des passages 497 sont ménagés aux extrémités inférieures de ces évidements 496 à travers le sommet de la chapelle 491 et derrière le rebord 493.

Ces passages 497 permettent la libre circulation des liquides et évite ainsi toute accumulation de liquide au droit du pion 495 lors que la caisse est ressortie du bain 3.

Accolés à la chapelle 492 et prolongeant les deux extrémités libres de l'embase 491 s'étendant de part et d'autre du plan de symétrie, s'étendent deux flasques 501 orientés verticalement. Ces flasques 501 sont munis à leur extrémité opposée à la chapelle 492, de trous débouchant 502 pour le montage de l'axe de rotation 11 du bras 10.

Ces deux flasques 501 sont par ailleurs reliés transversalement par une plaque 503 inclinée par rapport à la verticale et disposée sensiblement au droit des extrémités libres de l'embase 491 sur toute la hauteur des flasques 501.
Les deux flasques 501 sont également reliés transversalement par une colonnette 504 disposée sensiblement sous les trous 502 à une distance prédéterminée de ces derniers.

La plaque 503 et la colonnette 504 servent de butée pour la rotation du bras 10 autour de l'axe 11.

La plaque 503 présente un trou circulaire 505 débouchant pour le passage du doigt 12. Le diamètre de trou 505 est sensiblement supérieur à celui du doigt 12. Une fente 506 inférieure au diamètre du doigt 12 et s'étendant dans le plan de symétrie, prolonge le trou 505 vers le bas pour déboucher entre les extrémités de l'embase 491. Le trou 505 est par ailleurs localement élargi par des lumières 507 débouchant à sa périphérie.

Les lumières 507 et la fente 506 servent à favoriser l'écoulement des liquides et d'éviter ainsi tout grippement du doigt 12 dans le trou 505.

La plaque 503 comporte par ailleurs sur sa face tournée vers la colonnette 504 des tétons d'appuis 508 disposés en saillie autour du passage 505. Ces tétons 508 sont destinés à servir de butée à une rondelle 125 portée par le doigt 12 et éviter ainsi tout collement de l'épaulement 121 ou de la rondelle 125 lors d'un appui prolongé de l'épaulement 121 contre la plaque 503.

Dans le prolongement du trou 505 est ménagé à travers le pion 495 un passage 498 correspondant. Ce passage 498 débouche dans le plan de symétrie A-A du corps 490 sensiblement au-dessus de la zone d'appui annulaire 493. Tout comme le trou 505 et pour les mêmes raisons, le passage 498 est prolongé par le bas par une fente 499 s'étendant verticalement dans le plan de symétrie A-A du corps 490 en traversant le toit de la chapelle 492 pour déboucher dans une arche. De même, le passage 498 est également agrandi localement par des lumières débouchant à sa périphérie.

Ainsi le doigt 12 inséré à travers le trou 505 est à même de pénétrer obliquement dans la chapelle 492 à travers l'arche faisant face à la plaque 503 pour se loger dans le passage 498 du pion 495 et déboucher à l'extrémité opposée au-dessus du bord circulaire 493 et ce, à une distance appropriée de celui-ci.

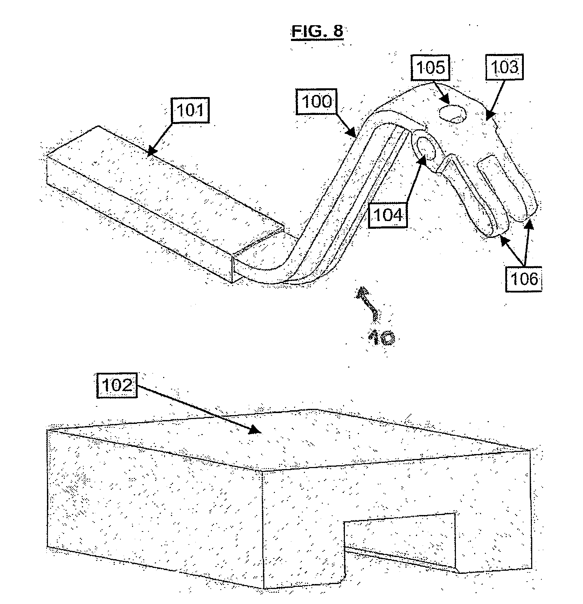

En se reportant à la figure 8, le bras 10 se compose d'une structure métallique 100 en S dont une extrémité 101 reçoit un contrepoids sous la forme d'une masse métallique 102 fixée de manière indémontable (soudure) ou démontable. L'autre extrémité comporte une tête élargie 103 au travers de laquelle est ménagé un premier passage traversant 104 s'étendant transversalement pour recevoir avec un jeu adapté l'axe 11. La tête 103 comporte un second passage traversant 105 orthogonal au premier et débouchant sensiblement au centre du passage 104. La tête 103 est prolongée par deux cames 106 parallèles et espacées l'une de l'autre, formant une fourche. Ces cames 106 sont destinées à s'étendre entre les flasques 501, de part et d'autre du doigt de verrouillage 12 et à coopérer avec des rondelles 124 et 125 portées par ce dernier.

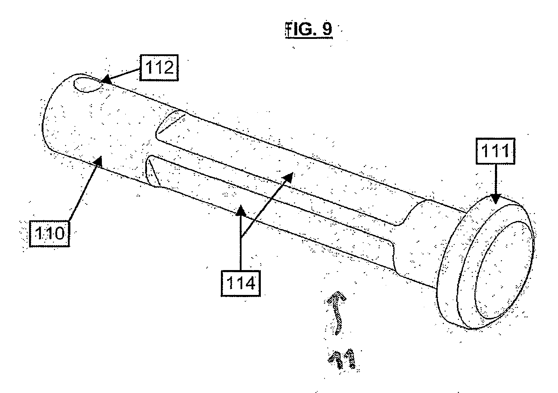

En se reportant à la figure 9, l'axe 11 destiné à l'articulation du bras 10 sur le corps 490 se compose d'une tige cylindrique 110 de diamètre correspondant aux trous 502. Cette tige 110 se termine à une extrémité par une tête élargie 111 et à l'autre extrémité, elle présente un perçage transversal 112 pour le passage d'une goupille 113.

Le corps de la tige 110 présente par ailleurs dans sa partie centrale destinée à être logée dans le passage 104 du bras 10, des méplats 114 répartis à la périphérie de la tige 110. De la sorte, l'axe 11 présente au droit du passage 104 une section sensiblement polygonale et de préférence sensiblement triangulaire, limitant les surfaces de contact entre l'axe 11 et la tête 103 du bras 10 à de simples bandes curvilignes. Cette disposition combinée avec le dimensionnement du jeu entre le passage 104 et l'axe 11 et l'existence du passage transversale 105 permet un écoulement optimal des liquides et prévient tout risque de grippage de l'axe 11 dans son logement 104 correspondant du bras 10.

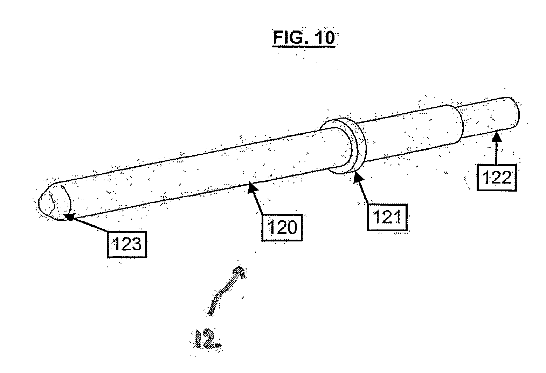

Le doigt 12, représenté à la figure 10 se compose d'un corps cylindrique 120 comportant un épaulement annulaire 121 et une extrémité filetée 122 destinée à recevoir un écrou 126. L'autre extrémité 123 se terminant en pointe. Deux rondelles 124 et 125 sont montées libres à coulissement le long de la tige 120 entre l'épaulement 121 et l'écrou 126, la rondelle 125 s'étendant côté épaulement 121 et la rondelle 124 côté écrou 126. La partie du doigt 12 s'étendant entre l'épaulement 121 et l'extrémité pointue 123 est destinée à être logée dans le trou 505 et le passage correspondant 498 du pion 495, tandis que les cames 106 du bras 10 s'étendent entre les rondelles 124 et 125 de part et d'autre de la tige 120.

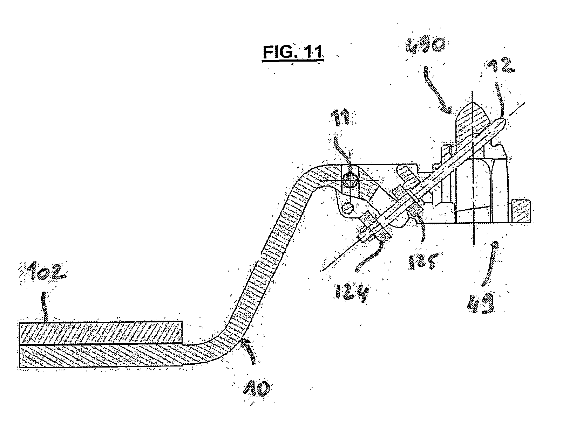

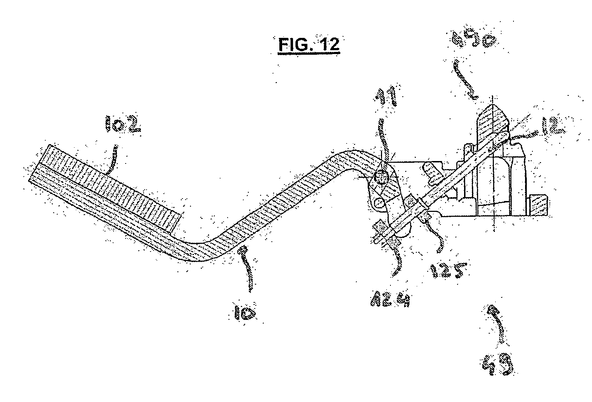

En se reportant aux figures 11 et 12, le fonctionnement du dispositif qui vient d'être décrit est le suivant. Sous l'action du contrepoids 102, le bras 10 est dans sa position normale abaissée de la figure 11. La fourche formée par les cames 106 pousse le doigt 12 vers le haut par l'intermédiaire de la rondelle supérieure 125 jusqu'à ce que celle-ci vienne en appui contre les tétons 508 de la plaque 503. Dans cette position, la tige 120 est adaptée pour que l'extrémité 123 du doigt 12 dépasse du passage 498 et s'étende en saillie à l'extérieur du pion 495 au-delà de la surface annulaire d'appui 493 à une hauteur prédéterminée de celle-ci. Ainsi la tôle formant le plancher de la caisse 2 se trouve prise alors entre ce doigt 12 et la surface d'appui 493 et ne peut se soulever verticalement au-delà d'un jeu prédéterminé. Ainsi sous l'action du pion 495 et du doigt 12, la caisse 2 se trouve immobilisée verticalement et horizontalement.

Lorsque l'on fait pivoter le bras 10 vers le haut autour de l'axe 11, cf. figure 12, par exemple sous l'action d'une rampe inclinée disposée parallèlement aux moyens de convoyage, les cames 106 agissant sur la rondelle 124 et donc sur l'écrou 126 poussent alors le doigt 12 vers le bas jusqu'à ce que les cames viennent en butée contre la colonnette 504. Dans cette position, l'extrémité 123 du doigt ne fait plus saillie à l'extérieur du pion 495, de sorte que la tôle du plancher de la caisse 2 se trouve libre verticalement et peut alors être déplacée perpendiculairement au plot 49.

## Revendications

1. Dispositif de transport pour caisse de véhicule, comprenant une structure porteuse (40) destinée à recevoir ladite caisse (2), ladite structure comportant des moyens d'appui, de positionnement et d'immobilisation (48, 49) de ladite caisse (2) sur ladite structure porteuse (40), lesdits moyens d'immobilisation étant intégrés aux dits moyens de positionnement (49) et étant formés d'un plot (490) et d'un doigt mobile (12) coopérant avec des moyens d'actionnement (10), **caractérisé en ce que** ledit doigt (12) est actionné par un bras (10) muni d'un contrepoids (102), ledit bras étant articulé sur le corps (490) dudit plot autour d'un axe (11) porté par ledit corps (490).

2. Dispositif de transport pour caisse de véhicule selon la revendication 1, **caractérisé en ce que** ledit doigt (12) est monté à coulissement entre une position haute où une extrémité (123) dudit doigt (12) fait saillie à l'extérieur dudit plot (490) et une position basse où ladite extrémité (123) dudit doigt (12) est logée à l'intérieur dudit plot (490).

3. Dispositif de transport pour caisse de véhicule selon la revendication 1, **caractérisé en ce que** ledit bras (10) comporte à son extrémité opposée au contrepoids (102) des cames (106) destinées à venir appuyer sur des rondelles montées coulissantes le long dudit doigt (12) entre des surfaces de butée axiales (121, 126).

4. Dispositif de transport pour caisse de véhicule selon la revendication 1, **caractérisé en ce que** ledit axe (11) présente une section sensiblement polygonale au droit du logement (104) correspondant dudit bras (10).

5. Dispositif de transport pour caisse de véhicule selon la revendication 4, **caractérisé en ce que** ledit logement (104) dudit bras (10) pour le passage dudit axe (11) coopère avec un passage (105) favorisant l'évacuation des liquides.

6. Dispositif de transport pour caisse de véhicule selon la revendication 1, **caractérisé en ce que** ledit doigt (12) est monté à coulissement dans des passages (505, 498) ménagés dans le corps (490) dudit plot, lesdits passages coopérant avec des ouvertures (506, 507, 499) favorisant l'évacuation des liquides hors desdits passages.

7. Dispositif de transport pour caisse de véhicule selon la revendication 1, **caractérisé en ce que** ledit plot comprend un corps (490) comportant une embase (491), une chapelle ajourée (492) comportant une surface d'appui annulaire (493), un pion (495) surmontant ladite chapelle (492), et des flasques (501) destinés à supporter l'axe de rotation dudit bras (10).

8. Dispositif de transport pour caisse de véhicule selon les revendications 6 et 7, **caractérisé en ce que** lesdits passages pour le doigt (12) sont formés à travers le pion (495) et à travers une plaque (503) s'étendant transversalement entre lesdits flasques (501).

## Claims

1. Device for transporting a vehicle body, comprising a carrier structure (40) designed to receive said body (2), said structure comprising means (48, 49) for pressing, positioning and immobilizing said body (2) on said carrier structure (40), said immobilizing means being integrated into said positioning means (49) and being formed from a mount (490) and from a movable finger (12) cooperating with actuating means (10), **characterized in that** said finger (12) is actuated by an arm (10) provided with a counterweight (102), said arm being articulated to the body (490) of said mount about a pin (11) supported by said body (490).

2. Device for transporting a vehicle body according to Claim 1, **characterized in that** said finger (12) is mounted so as to slide between a high position, in which one end (123) of said finger (12) projects to the outside of said mount (490), and a low position, in which said end (123) of said finger (12) is housed inside said mount (490).

3. Device for transporting a vehicle body according to Claim 1, **characterized in that** said arm (10) has, on its opposite end from the counterweight (102), cams (106) intended to bear on washers mounted so as to slide along said finger (12) between axial stop surfaces (121, 126).

4. Device for transporting a vehicle body according to Claim 1, **characterized in that** said pin (11) has an approximately polygonal cross section in line with the corresponding housing (104) on said arm (10).

5. Device for transporting a vehicle body according to Claim 4, **characterized in that** said housing (104) on said arm (10) for the passage of said pin (11) cooperates with a passage (105) promoting the discharge of liquids.

6. Device for transporting a vehicle body according to Claim 1, **characterized in that** said finger (12) is mounted so as to slide in passages (505, 498) provided in the body (490) of said mount, said passages cooperating with openings (506, 507, 499) promoting the discharge of liquids from said passages.

7. Device for transporting a vehicle body according to Claim 1, **characterized in that** said mount comprises a body (490) having a base (491), an apertured housing (492) having an annular bearing surface (493), a stud (495) surmounting said housing (492), and flanges (501) designed to support the rotation pin of said arm (10).

8. Device for transporting a vehicle body according to Claims 6 and 7, **characterized in that** said passages for the finger (12) are formed through the stud (495) and through a plate (503) that extends transversely between said flanges (501).

## Patentansprüche

1. Vorrichtung zum Transportieren einer Fahrzeugkarosserie, die eine Tragstruktur (40) aufweist, die dazu bestimmt ist, die Karosserie (2) aufzunehmen, wobei die Struktur Abstütz-, Positionierungs- und Immobilisierungsmittel (48, 49) für die Karosserie (2) an der Tragstruktur (40) aufweist, wobei die Immobilisierungsmittel in die Positionierungsmittel (49) integriert sind und durch einen Höcker (490) und einen beweglichen Zapfen (12), der mit Betätigungsmitteln (10) zusammenwirkt, gebildet sind, **dadurch gekennzeichnet, dass** der Zapfen (12) durch einen Arm (10) betätigt wird, der mit einem Gegengewicht (102) versehen ist, wobei der Arm an dem Körper (490) des Höckers um eine Welle (11), die von dem Körper (490) getragen wird, angelenkt ist.

2. Fahrzeugkarosserie-Transportvorrichtung nach Anspruch 1, **dadurch gekennzeichnet, dass** der Zapfen (12) so angebracht ist, dass er zwischen einer oberen Position, in der ein Ende (123) des Zapfens (12) in die äußere Umgebung des Höckers (490) vorsteht, und einer unteren Position, in der das Ende (123) des Zapfens (12) in dem Höcker (490) untergebracht ist, gleiten kann.

3. Fahrzeugkarosserie-Transportvorrichtung nach Anspruch 1, **dadurch gekennzeichnet, dass** der Arm (10) an seinem Ende gegenüber dem Gegengewicht (102) Nocken (106) aufweist, die dazu bestimmt sind, sich an Scheiben abzustützen, die so angebracht sind, dass sie längs des Zapfens (12) zwischen axialen Anschlagoberflächen (121, 126) gleiten können.

4. Fahrzeugkarosserie-Transportvorrichtung nach Anspruch 1, **dadurch gekennzeichnet, dass** die Welle (11) am Ort des entsprechenden Aufnahmesitzes (104) des Arms (10) einen im Wesentlichen polygonalen Querschnitt aufweist.

5. Fahrzeugkarosserie-Transportvorrichtung nach Anspruch 4, **dadurch gekennzeichnet, dass** der Aufnahmesitz (104) des Arms (10) für den Durchgang der Welle (11) mit einem Durchgang (105) zusammenwirkt, der die Abführung von Flüssigkeiten begünstigt.

6. Fahrzeugkarosserie-Transportvorrichtung nach Anspruch 1, **dadurch gekennzeichnet, dass** der Zapfen (12) so angebracht ist, dass er in Durchlässen (505, 498) gleiten kann, die im Körper (490) des Höckers ausgebildet sind, wobei die Durchlässe mit Öffnungen (506, 507, 499) zusammenwirken, die die Abführung von Flüssigkeiten aus diesen Durchlässen begünstigen.

7. Fahrzeugkarosserie-Transportvorrichtung nach Anspruch 1, **dadurch gekennzeichnet, dass** der Höcker einen Körper (490) aufweist, der eine Fußfläche (491), eine unterbrochene Wölbung (492) mit einer ringförmigen Abstützfläche (493), einen über die Wölbung (492) nach oben vorstehenden Stift (495) und Flansche (501), die dazu bestimmt sind, die Drehwelle des Arms (10) zu unterstützen, enthält.

8. Fahrzeugkarosserie-Transportvorrichtung nach den Ansprüchen 6 und 7, **dadurch gekennzeichnet, dass** die Durchlässe für den Zapfen (12) durch den Stift (495) und durch eine Platte (503), die sich transversal zwischen diesen Flanschen (501) erstreckt, gebildet sind.
